# EUROPEAN PATENT APPLICATION

(11) **EP 4 553 721 A1**
(43) Date of publication of application: **14.05.2025**
(21) Application number: 23835168.8
(22) Date of filing: 22.05.2023
(51) Int. Cl.: G06N 20/00

(54) **MODEL GENERATION APPARATUS, MODEL GENERATION METHOD, AND PROGRAM**

(30) Priority: 07.07.2022 JP 2022109751
(71) Applicant: KONICA MINOLTA, INC., Tokyo 100-7015 (JP)
(72) Inventor: OZAKI, Yuichi, Tokyo 100-7015 (JP); FURUTA, Hikaru, Tokyo 100-7015 (JP)
(74) Representative: Gille Hrabal Partnerschaftsgesellschaft mbB Patentanwälte
(86) International application number: PCT/JP2023/019002
(87) International publication number: WO 2024/009632

(57) **Abstract**

According to the present disclosure, a technology for efficiently generating machine learning models for respective device types is provided. One aspect of the present disclosure pertains to a model generation apparatus having: a model information acquisition unit for acquiring base model information indicating a base model; and a model processing unit capable of generating, on the basis of the base model information, individual type models corresponding to a plurality of device types.

## Description

### Technical Field

The present disclosure relates to a model generation apparatus, a model generation method, and a program.

### Background Art

With the recent development of deep learning technology, machine learning models have come to be used for various purposes. Typically, a machine learning model is used on different computing resources depending on the usage environment or the like. For example, one machine learning model may be executed by a Graphics Processing Unit (GPU) or the like having a high computing capacity, whereas another machine learning model may be executed by an edge computer or the like having only a limited computing capacity.

### Citation List

### Patent Literatures

PTL 1
Japanese Unexamined Patent Publication No. 2021-103441

### Non- Patent Literatures

Non- PTL 1
   https://pjreddie.com/darknet/yolo/
Non- PTL 2
   https://arxiv.org/pdf/1804.02767.pdf

### Summary of Invention

### Technical Problem

In general, a machine learning model may be built depending on the available computing resources. That is, a GPU, a Central Processing Unit (CPU), a field-programmable gate array (FPGA), or the like is used as a device type that causes a machine learning model to operate, and the specifications, the operation speed, the memory capacity, and the like of each device type may be different. Therefore, it is necessary to design a machine learning model corresponding to each device type. For example, different machine learning models needs to be separately built for the same task according to device types, and a machine learning model needs to be separately trained and generated for each device type that executes the same task.

In consideration of the above-described problem, one object of the present disclosure is to provide a technique for efficiently generating a machine learning model for each device type.

### Solution to Problem

An aspect of the present disclosure relates to a model generation apparatus including: a model information acquirer that acquires base model information indicating a base model; and a model processor that generates an individual type model corresponding to each of a plurality of device types based on the base model information.

### Advantageous Effects of Invention

According to the present disclosure, a machine learning model for each device type can be efficiently generated.

### Brief Description of the Drawings

Fig. 1 is a schematic diagram illustrating a model generation system according to an embodiment of the present disclosure;
Fig. 2 is a schematic diagram illustrating an example of a procedure for generating a machine learning model for each device type;
Fig. 3 is a schematic diagram illustrating a procedure for generating a machine learning model for each device type according to an embodiment of the present disclosure;
Fig. 4 is a block diagram illustrating a hardware configuration of a model generation apparatus according to an embodiment of the present disclosure;
Fig. 5 is a block diagram illustrating a functional configuration of a model generation apparatus according to an embodiment of the present disclosure;
Fig. 6 is a diagram illustrating an individual model generation process according to an embodiment of the present disclosure;
Fig. 7 is a flowchart illustrating the individual model generation process according to an embodiment of the present disclosure;
Fig. 8 is a diagram illustrating the individual model generation process according to an embodiment of the present disclosure;
Fig. 9 is a flowchart illustrating the individual model generation process according to an embodiment of the present disclosure;
Fig. 10 is a diagram illustrating the individual model generation process according to an embodiment of the present disclosure;
Fig. 11 is a flowchart illustrating the individual model generation process according to an embodiment of the present disclosure;
Fig. 12 is a diagram illustrating the individual model generation process according to an embodiment of the present disclosure;
Fig. 13 is a flowchart illustrating the individual model generation process according to an embodiment of the present disclosure;
Fig. 14 is a diagram illustrating the individual model generation process according to an embodiment of the present disclosure;
Fig. 15 is a flowchart illustrating the individual model generation process according to an embodiment of the present disclosure;
Fig. 16 is a diagram illustrating an individual model update process according to an embodiment of the present disclosure;
Fig. 17 is a flowchart illustrating the individual model update process according to an embodiment of the present disclosure;
Fig. 18 is a diagram illustrating the individual model update process according to an embodiment of the present disclosure; and
Fig. 19 is a flowchart illustrating the individual model update process according to an embodiment of the present disclosure.

### Description of Embodiments

The following explains an embodiment of the present disclosure with reference to the drawings.

In the following embodiments, a model generation apparatus is disclosed that generates an individual machine learning model for each device type (hereinafter referred to as an "individual type model") from a machine learning model (hereinafter referred to as a "base model") common to target device types (e.g., a GPU, a CPU, and an FPGA).

More specifically, upon acquisition of base model information indicating a base model (e.g., architecture information and parameter information on the base model), a model generation apparatus according to an embodiment described later executes model compression (e.g., pruning and quantization) on the base model on the basis of the acquired base model information to generate an individual type model adapted to a device type.

### Model Generation System

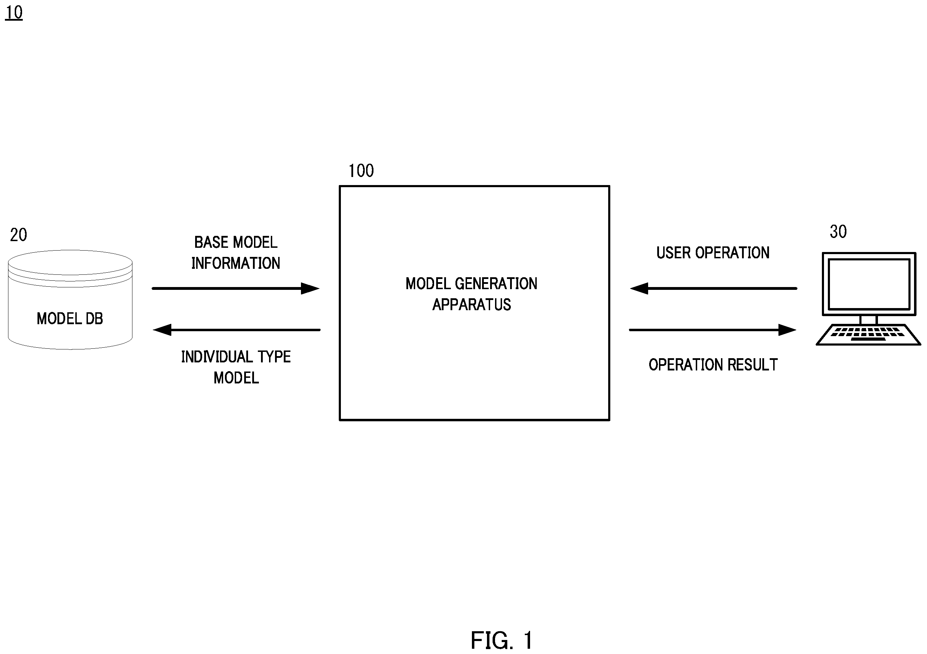

First, a model generation system 10 according to an embodiment of the present disclosure will be described with reference to Fig. 1. Fig. 1 is a schematic diagram illustrating the model generation system 10 according to an embodiment of the present disclosure. As illustrated in Fig. 1, the model generation system 10 includes a model database (DB) 20, a terminal 30, and a model generation apparatus 100.

As illustrated in Fig. 1, when a user instructs the terminal 30 to generate an individual type model corresponding to a particular device type (e.g., GPU, CPU, FPGA, etc) from a base model for a particular task, the terminal 30 sends the instruction to the model generation apparatus 100. Upon receiving the instruction, the model generation apparatus 100 acquires, from the model DB 20, base model information indicating architecture information, parameter information, and the like of a base model for the task. Then, the model generation apparatus 100 generates an individual type model corresponding to the specification, the calculation capability, and the like of the device type on the basis of the acquired base model information. The generated individual type model may be stored in the model DB 20 and notified to the terminal 30 as an operation result.

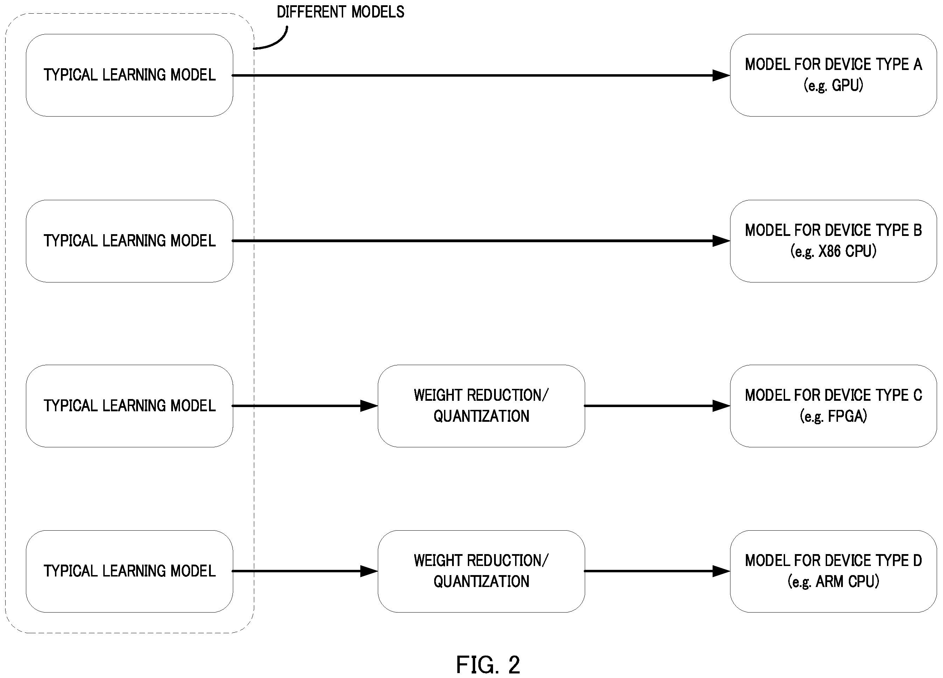

Conventionally, as illustrated in Fig. 2, for example, a machine learning model corresponding to a device type is generated by individually training a machine learning model prepared for each device type. For example, for a specific task such as an object detection model, an anomaly detection model, etc., different individual-type models such as a GPU-oriented model, a 1-oriented model, an FPGA-oriented model, an ARMCPU-oriented model, etc., are prepared, and each individual-type model is separately trained by the training data through a normal training process. In this case, the individual type model for each device type may be designed to have a model architecture corresponding to a specification, a calculation capability, and the like of the device type, and may be trained by the training data. Alternatively, an individual type model for each device type may be designed to have a specific model architecture, trained by training data, and then compressed by means of weight reduction and/or quantization correspondingly to a specification, a computing capability, and the like of the device type.

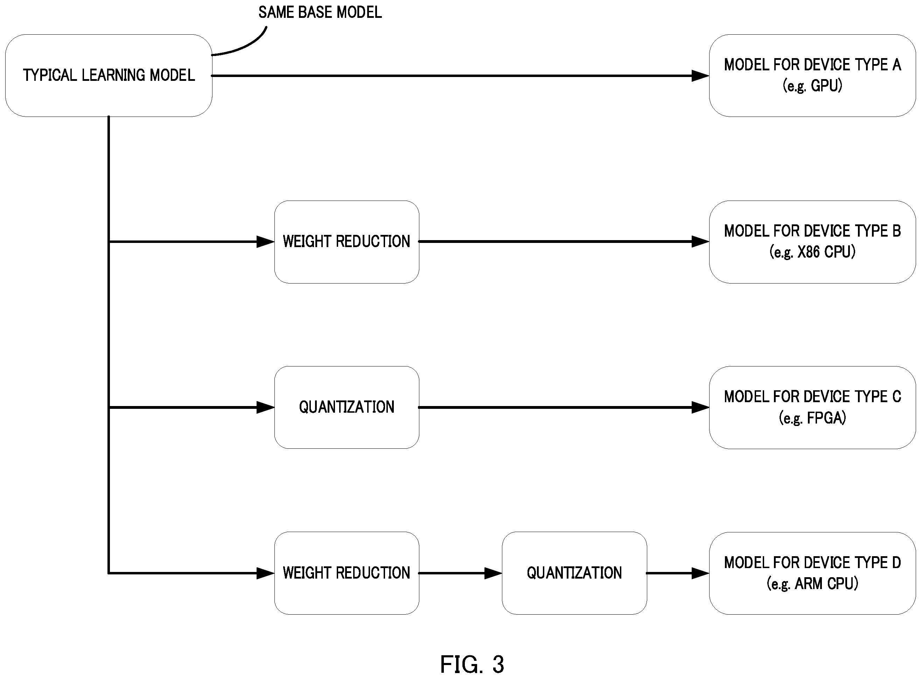

On the other hand, in the individual model generation process according to the present disclosure, as illustrated in Fig. 3, a machine learning model common to device types is designed and trained as a base model for a particular task. Then, an individual type model for each device type is generated by weight reduction and/or quantizing the base model correspondingly to the specification, computational capability, and the like of the device type. Thus, compared with the conventional approach of separately training and generating an individual type model for each device type, only a common base model needs to be trained, thus allowing a reduction in the cost required for the training process.

In the embodiment illustrated in Fig. 1, the base model is trained in advance by a training apparatus (not illustrated) different from the model generation apparatus 100, but the model generation system 10 according to the present disclosure is not limited thereto. For example, the model generation apparatus 100 may train and hold a base model. Further, although the model generation apparatus 100 acquires the base model information indicating the base model from the model DB 20 in the illustrated example, the present disclosure is not limited thereto. For example, the model generation apparatus 100 may acquire and hold the base model itself.

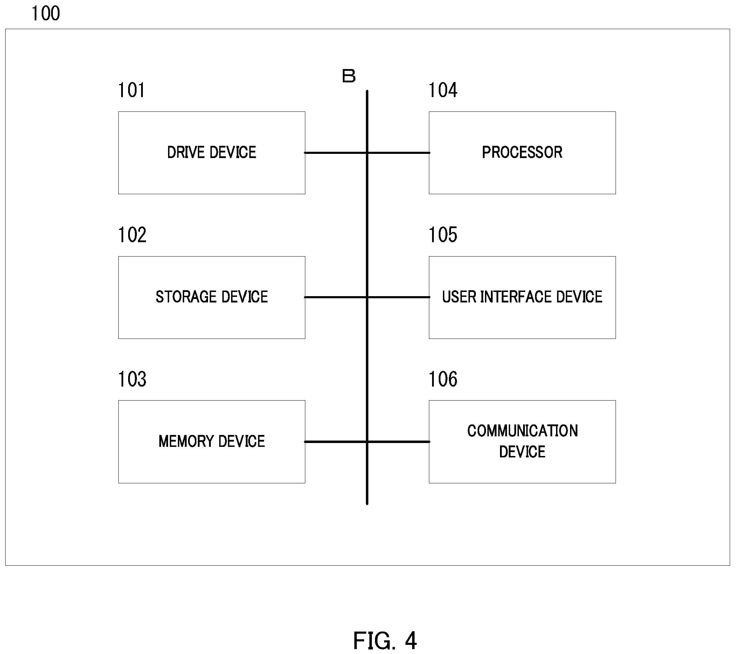

Here, the model generation apparatus 100 may be implemented by a computing device such as a server, a personal computer (PC), a smartphone, or a tablet and may have, for example, a hardware configuration as illustrated in Fig. 4. That is, each of the model generation apparatuses 100 includes a drive device 101, a storage device 102, a memory device 103, a processor 104, a user interface (UI) device 105, and a communication device 106 that are connected to each other via a bus B.

A program or an instruction for realizing various functions and processes to be described later in the model generation apparatus 100 may be stored in a detachable storage medium such as a Compact Disk -Read Only Memory (CD-ROM) or a flash memory. When the storage medium is set in the drive device 101, the program or the instruction is installed in the storage device 102 or the memory device 103 from the storage medium via the drive device 101. Note that the program or the instructions do not necessarily have to be installed from the storage medium, but may be downloaded from any external apparatus via a network or the like.

The storage device 102 is implemented by a hard disk drive or the like, and stores, together with an installed program or instruction, a file, data, or the like used for execution of the program or instruction.

The memory device 103 is realized by a random access memory, a static memory, or the like, and when a program or an instruction is activated, reads the program, the instruction, data, or the like from the storage device 102 and stores the read program, instruction, data, or the like. The storage device 102, the memory device 103, and removable storage media may be collectively referred to as non-transitory storage media (non-transitory storage medium).

The processor 104 may be implemented by one or more central processing units (CPUs), graphics processing units (GPUs), processing circuits (processing circuitry), or the like, which may include one or more processor cores, and may perform various functions and processes of the model generation apparatus 100, which will be described below, according to programs and instructions stored in the memory device 103 and parameters required to execute the programs and instructions.

The user interface (UI) device 105 may include an input device such as a keyboard, a mouse, a camera, or a microphone, an output device such as a display, a speaker, a headset, or a printer, and an input/output device such as a touch panel, and implements an interface between a user and the model generation apparatus 100. For example, the user operates the model generation apparatus 100 by operating a Graphical User Interface (GUI) displayed on a display or a touch panel with a keyboard, a mouse, or the like.

The communication device 106 is realized by various communication circuits that execute wired and/or wireless communication processing with an external apparatus or a communication network such as the Internet, a Local Area Network (LAN), or a cellular network.

However, the above-described hardware configuration is merely an example, and the model generation apparatus 100 according to the present disclosure may be implemented by any other appropriate hardware configuration.

### Model Generation Apparatus

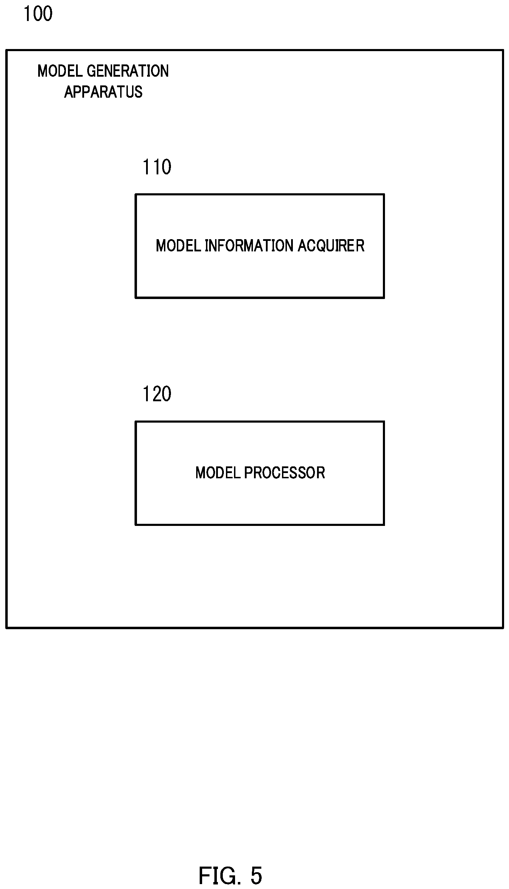

Next, the model generation apparatus 100 according to an embodiment of the present disclosure will be described with reference to Figs. 5 to 7. Fig. 5 is a block diagram illustrating a functional configuration of the model generation apparatus 100 according to an embodiment of the present disclosure. As illustrated in Fig. 5, the model generation apparatus 100 according to the present example includes a model information acquirer 110 and a model processor 120. For example, one or more functional units of the model information acquirer 110 and the model processor 120 may be realized by one or more processors 104 executing one or more programs or instructions.

The model information acquirer 110 acquires base model information indicating a base model. More specifically, the model information acquirer 110 acquires, from the model DB 20, base model information such as architecture information and parameter information indicating a base model commonly used to generate the individual type models for the respective device types. The base model is a machine learning model trained for a particular task (e.g., object detection, abnormality detection, etc) and may be typically built for a device type (e.g., GPU, etc) with the highest computing capability, specification, etc. On the other hand, an individual type model for each device type is a machine learning model for a device type (e.g., x86CPU, FPGA, ARMCPU, etc) with more limited computing power, specifications, etc, and may be adapted to the specifications, computing power, etc., of the device type by weight reduction and/or quantizing the base model.

The model information acquirer 110 may acquire the base model itself instead of or in addition to the base model information such as the architecture information and the parameter information of the base model. The model information acquirer 110 may extract base model information such as architecture information and parameter information from the acquired base model itself.

The model processor 120 generates an individual type model corresponding to the device type on the basis of the base model information. Specifically, the model processor 120 performs one or both of pruning and quantization on the base model on the basis of the base model information, and generates an individual type model adapted to the calculation capability, specification, and the like of a specific device type. Being able to generate an individual type model corresponding to each of a plurality of device types on the basis of the base model information may be, for example, being able to generate four individual type models of an individual type model for a GPU, an individual type model for an FPGA, an individual type model for an FPGA, and an individual type model for an ARMCPU, or being able to generate any one of the individual type models.

Specifically, the model processor 120 may perform pruning of the base model by deleting a connection and/or a node at a position where a weight between nodes in the base model is small. For example, the model processor 120 may perform pruning of the base model according to the amount of deletion of nodes and/or connections between nodes that corresponds to the computing capability, specification, and the like of a particular device type. Accordingly, it is possible to acquire the individual type model generated through weight reduction of the base model in accordance with the device type. Note that specific pruning may be executed in accordance with any known method.

Further, the model processor 120 may express the parameters of the base model (for example, the weights between the nodes, the parameters of the activation function, and the like) with a smaller number of bits. For example, when the weight between the nodes of the base model is expressed by 32 bits, the weight may be quantized to 8 bits or the like. Specifically, the model processor 120 may quantize the parameters of the base model according to a quantization level corresponding to the calculation capability, specification, or the like of a specific device type. Thus, it is possible to acquire an individual type model generated by quantizing the base model correspondingly to the device type. Note that specific quantization processes may be executed in accordance with any known method.

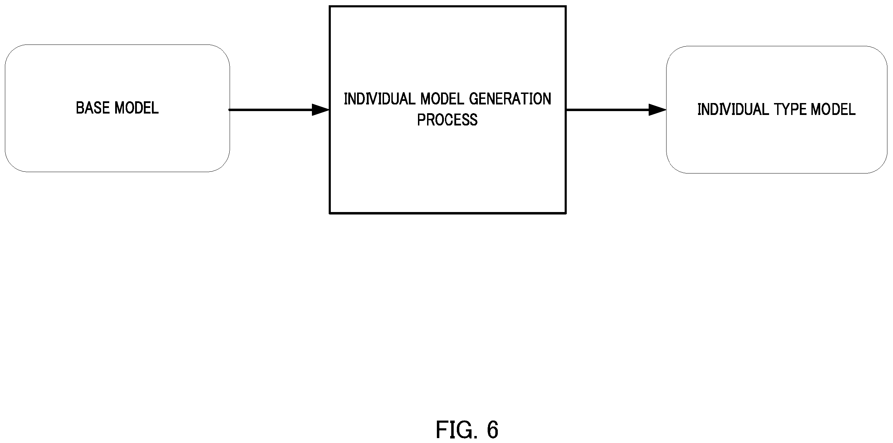

Fig. 6 is a schematic diagram illustrating the individual model generation process according to an embodiment of the present disclosure. As illustrated in Fig. 6, when the model information acquirer 110 acquires the base model information indicating the base model, the model processor 120 executes the individual model generation process based on the base model information and generates the individual type model corresponding to the specific device type from the base model. In the illustrated example, the model processor 120 executes an individual model generation process corresponding to any device type and generates an individual type model corresponding to the device type from a common base model.

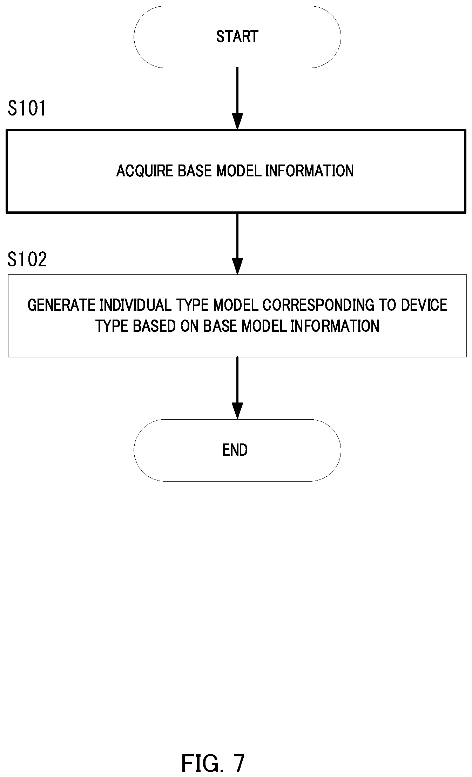

Fig. 7 is a flowchart illustrating the individual model generation process according to an embodiment of the present disclosure. The individual model generation process may be performed by the model generation apparatus 100, and more specifically, may be implemented by executing one or more programs or instructions stored in one or more memory devices 103 by one or more processors 104 of the model generation apparatus 100.

As illustrated in Fig. 7, in step S101, the model generation apparatus 100 acquires base model information. More specifically, the model information acquirer 110 acquires base model information (for example, architecture information, parameter information, and the like) indicating a base model commonly used for a specific task (for example, object detection, abnormality detection, and the like) from the model DB 20. Note that the model information acquirer 110 may acquire the base model itself instead of or in addition to the base model information. Typically, the base model may be a machine learning model built for a device type (e.g., a GPU or the like) with the highest computing capability, specification, or the like.

In step S102, the model generation apparatus 100 generates an individual type model corresponding to the device type, based on the base model information. For example, the model generation apparatus 100 may be able to generate, based on the base model information, an individual type model corresponding to each of a plurality of device types, a plurality of individual type models, or any one of the individual type models. Specifically, the model processor 120 may perform one or both of pruning and quantization on the base model based on the base model information, and generate a machine learning model adapted to the calculation capability, specification, and the like of the specific device type as the individual type model. For example, the model processor 120 may perform pruning of the base model by deleting a connection and/or a node at a position where a weight between nodes in the base model is small, according to a deletion amount of nodes and/or connections between nodes corresponding to the calculation capability, the specification, and the like of a specific device type. In addition, the model processor 120 may quantize the weight of the base model, the parameter of the activation function, and the like according to the quantization level corresponding to the calculation capability, the specifications, and the like of the specific device type. Note that specific pruning and quantization processes may be executed in accordance with any known method.

According to this example, an individual type model for a specific device type having more limited computing capability, specifications, and the like can be efficiently acquired from trained base models commonly available for specific tasks.

### Variation 1

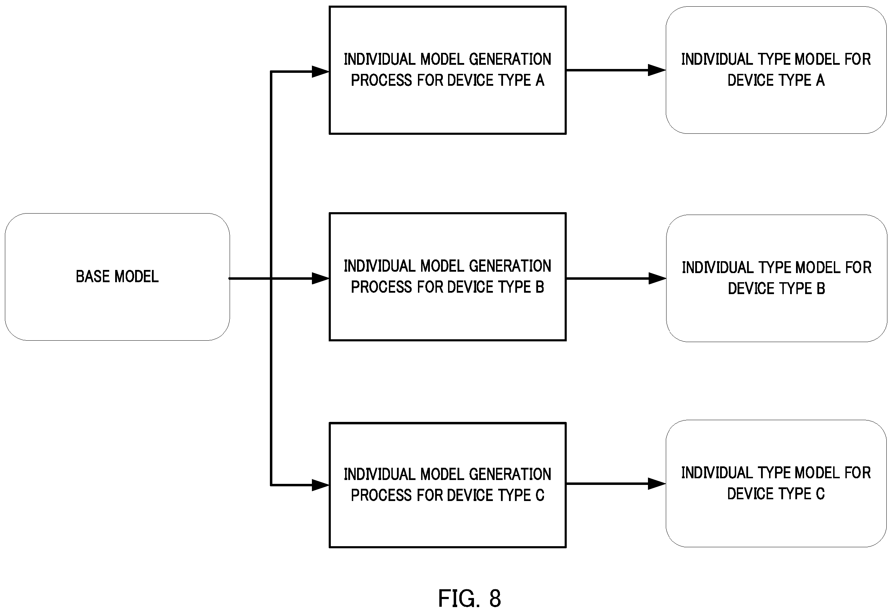

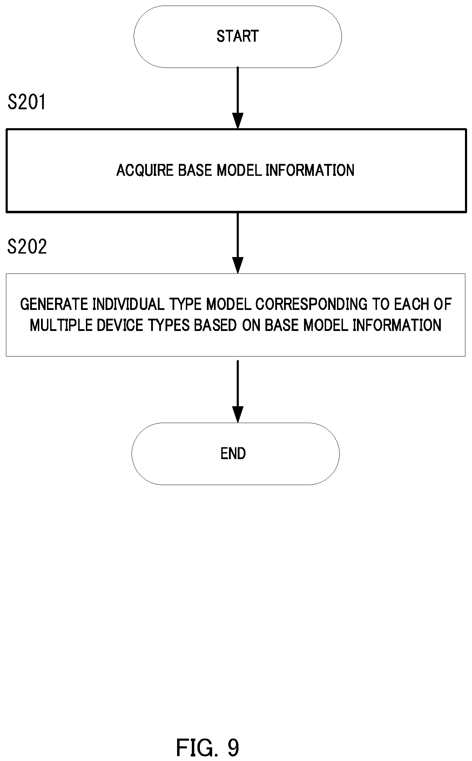

Next, an individual type generation process according to another embodiment of the present disclosure will be described with reference to Figs. 8 and 9. In the present embodiment, the model generator 120 executes an individual model generation process of generating an individual type model for each device type corresponding to each of a plurality of device types based on the base model information.

Fig. 8 is a schematic diagram illustrating the individual model generation process according to an embodiment of the present disclosure. As illustrated in Fig. 8, when the model information acquirer 110 acquires base model information indicating a base model, the model processor 120 executes the individual model generation process for each device type corresponding to each of a plurality of device types on the basis of the base model information, and generates an individual type model corresponding to each device type from the base model. In the illustrated embodiment, the model processor 120 executes three individual model generation processes corresponding to three device types A, B, and C, and generates individual type models for the device types A, B, and C from a common base model.

For example, if the calculation capabilities CA, CB, and CC of the three device types A, B, and C are CA> CB > CC, the model processor 120 may set the deletion amounts RA, RB, and RC of nodes and/or connections between nodes to RC > RB > RA in pruning the individual type models MA, MB, and MC corresponding to the device types A, B, and C, and prune the base model. Similarly, in a case where the three device types A, B, and C have the specifications SA, SB, and SC, respectively, the model processor 120 quantizes the individual type models MA, MB, and MC corresponding to the device types A, B, and C by Parameters of a common base model may be quantized generate individual type models for device types A, B, and C, respectively, correspondingly to the quantization levels QA, QB, and QC of the specifications SA, SB, and SC.

Fig. 9 is a flowchart illustrating the individual model generation process according to an embodiment of the present disclosure. The individual model generation process may be performed by the model generation apparatus 100, and more specifically, may be implemented by executing one or more programs or instructions stored in one or more memory devices 103 by one or more processors 104 of the model generation apparatus 100.

As illustrated in Fig. 9, in step S201, the model generation apparatus 100 acquires base model information. More specifically, the model information acquirer 110 acquires base model information indicating a base model commonly used for a specific task from the model DB 20.

In step S202, the model generation apparatus 100 generates an individual type model for each of the plurality of device types, based on the base model information. For example, when three individual type models corresponding to three device types A, B, and C are generated, the model processor 120 may perform one or both of pruning and quantization on the base model on the basis of the base model information to generate the individual type models MA, MB, and MC adapted to the calculation capability, the specification, and the like of each of the device types A, B, and C.

According to the present embodiment, it is possible to efficiently acquire an individual type model for each device type of a plurality of device types having more limited calculation capability, specifications, and the like from a trained base model which can be commonly used for a specific task.

### Variation 2

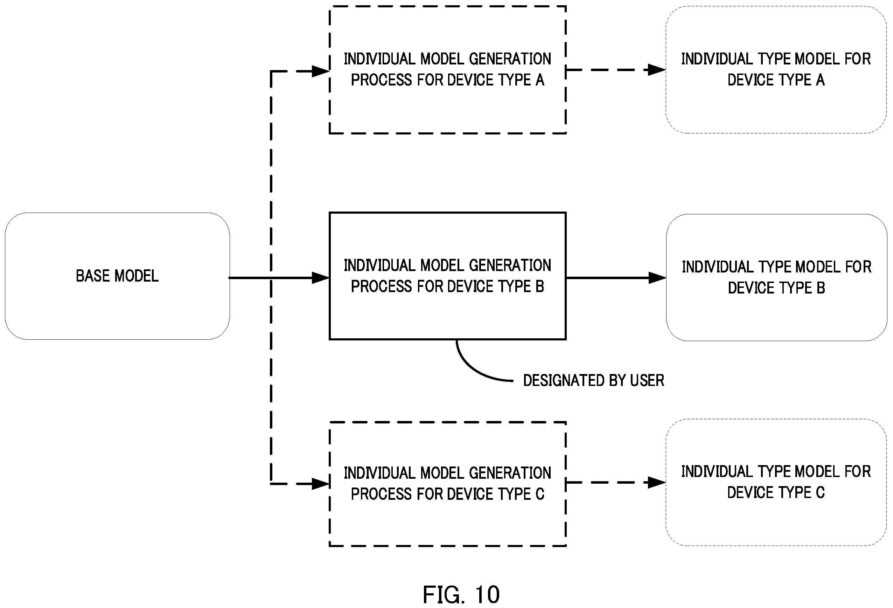

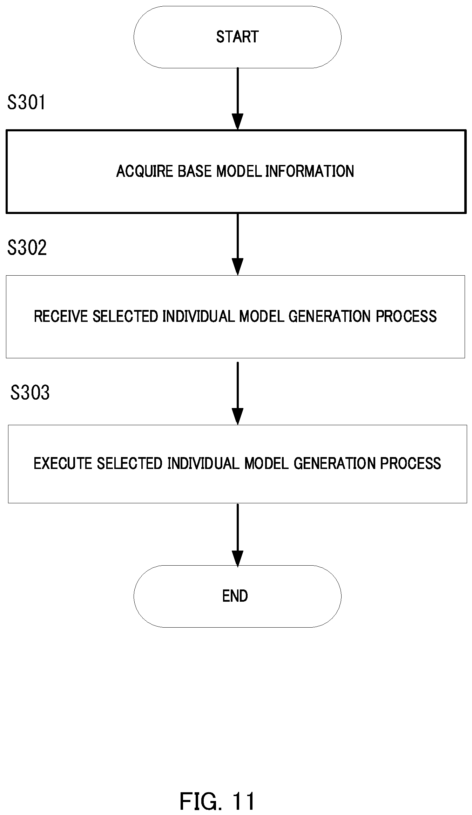

Next, an individual type generation process according to another embodiment of the present disclosure will be described with reference to Figs. 10 and 11. In the present embodiment, the model generator 120 executes the selected individual model generation process.

Fig. 10 is a schematic diagram illustrating the individual model generation process according to an embodiment of the present disclosure. As illustrated in Fig. 10, the model processor 120 executes the individual model generation process for the selected device type, and acquires the individual type model corresponding to the individual model generation process for the device type. In the illustrated example, the individual model generation process for the device type B is selected from among the three device types A, B, and C by the user, and the model processor 120 executes the selected individual model generation process for the device type B and generates an individual type model for the device type B from a common base model.

Fig. 11 is a flowchart illustrating the individual model generation process according to an embodiment of the present disclosure. The individual model generation process may be performed by the model generation apparatus 100, and more specifically, may be implemented by executing one or more programs or instructions stored in one or more memory devices 103 by one or more processors 104 of the model generation apparatus 100.

As illustrated in Fig. 11, in step S301, the model generation apparatus 100 acquires base model information. More specifically, the model information acquirer 110 acquires base model information indicating a base model commonly used for a specific task from the model DB 20.

In step S302, the model generation apparatus 100 receives the selected individual model generation process. Specifically, the model processor 120 receives identification information (e.g., a process ID) identifying one or more individual model generation processes from the user or the like and identifies an individual model generation process for a device type corresponding to the received identification information.

In step S303, the model generation apparatus 100 executes the selected individual model generation process. Specifically, the model processor 120 executes the individual model generation process for the device type corresponding to the received identification information based on the base model information, and acquires the corresponding individual type model. For example, upon receiving identification information (e.g., process ID = B) indicating the individual model generation process for device type B from the user, the model processor 120 executes the individual model generation process for device type B and generates an individual type model for device type B on the basis of the base model information.

According to the present embodiment, it is possible to efficiently acquire the corresponding individual type model by executing the individual model generation process for the device type selected by the user or the like on the base model which can be commonly used for the specific task.

### Variation 3

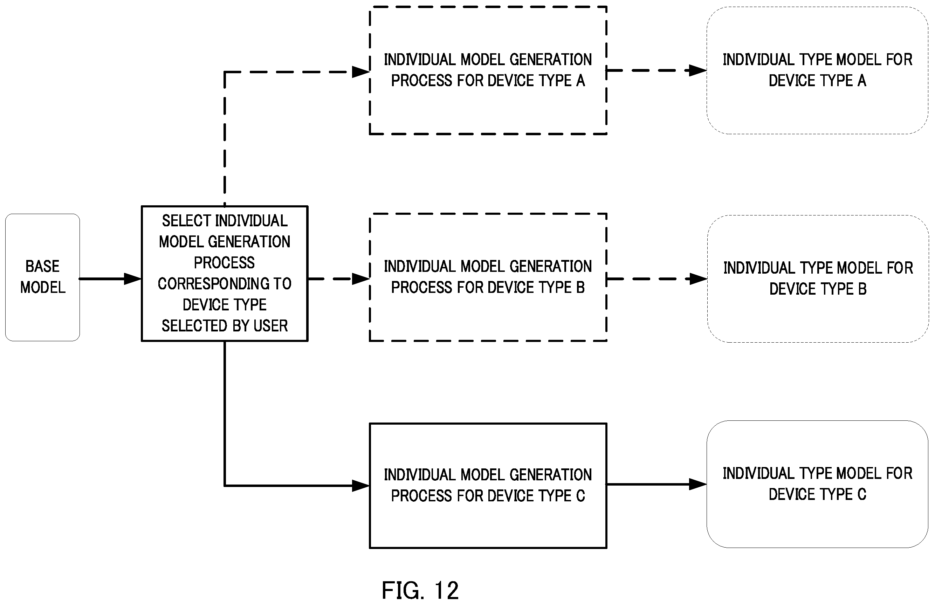

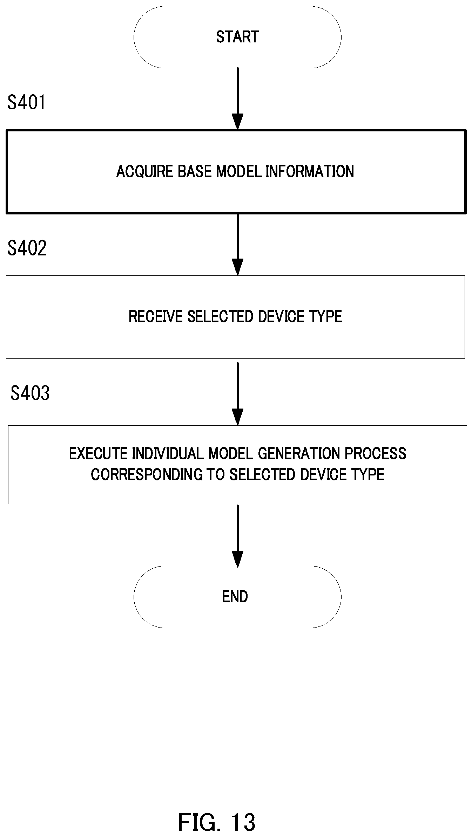

Next, individual type generation process according to another example of the present disclosure will be described with reference to Fig. 12 and Fig. 13. In the present embodiment, the model processor 120 executes an individual model generation process corresponding to the selected device type.

Fig. 12 is a schematic diagram illustrating the individual model generation process according to an embodiment of the present disclosure. As illustrated in Fig. 12, the model processor 120 executes the individual model generation process corresponding to the selected device type, and acquires the individual type model corresponding to the selected device type. In the illustrated example, the device type C is selected from among the three device types A, B, and C by the user, and the model processor 120 executes the individual model generation process for the selected device type C to generate an individual type model for the device type C from a common base model.

Fig. 13 is a flowchart illustrating the individual model generation process according to an embodiment of the present disclosure. The individual model generation process may be performed by the model generation apparatus 100, and more specifically, may be implemented by executing one or more programs or instructions stored in one or more memory apparatuses 103 by one or more processors 104 of the model generation apparatus 100.

As illustrated in Fig. 13, in step S401, the model generation apparatus 100 acquires base model information. More specifically, the model information acquirer 110 acquires base model information indicating a base model commonly used for a specific task from the model DB 20.

In step S402, the model generation apparatus 100 receives the selected device type. Specifically, the model processor 120 receives identification information (e.g., device ID) identifying one or more device types from the user or the like, and determines the device type individual model generation process corresponding to the received identification information.

In step S403, the model generation apparatus 100 executes the individual model generation process corresponding to the selected device type. Specifically, the model processor 120 executes the individual model generation process for the device type of the device type corresponding to the received identification information based on the base model information, and acquires the corresponding individual type model. For example, upon receiving identifying information indicating the device type C (e.g., device ID = C) from the user, the model processor 120 executes an individual model generation process for the device type C to generate an individual type model for the device type C on the basis of the base model information.

According to the present embodiment, it is possible to execute the individual model generation process corresponding to the device type selected by the user or the like from the base model commonly available for the specific task, and efficiently acquire the corresponding individual type model.

### Variation 4

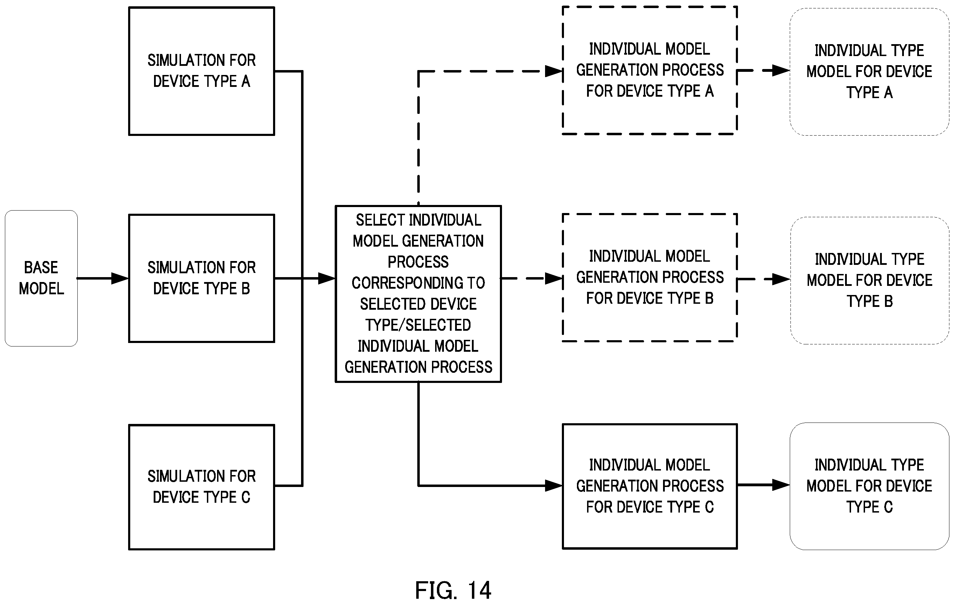

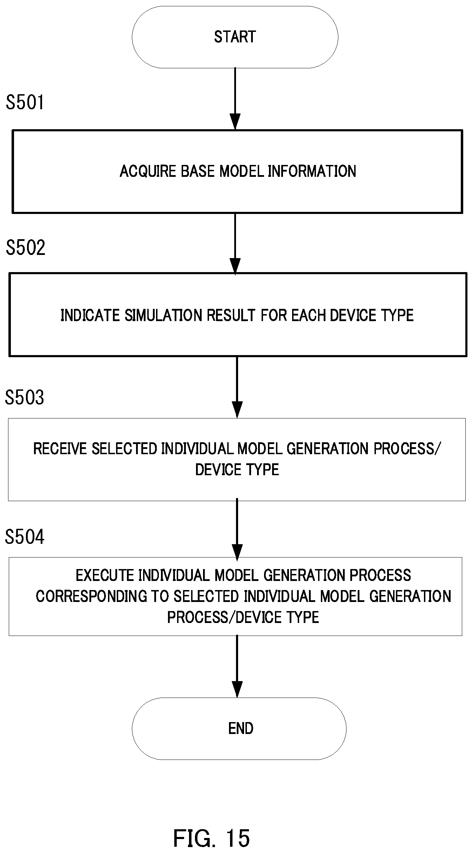

Next, the individual type generation process according to another example of the present disclosure will be described with reference to Fig. 14 and Fig. 15. In the present embodiment, the model processor 120 presents the simulation result regarding the individual type model to the user.

Fig. 14 is a schematic diagram illustrating the individual model generation process according to an embodiment of the present disclosure. As illustrated in Fig. 14, the model processor 120 may hold in advance a simulation result indicating the performance, such as prediction accuracy and calculation speed, of an individual type model for each device type, and present the simulation result of the individual type model for each device type as reference information when the user selects individual model generation process or a device type. In the illustrated example, the model processor 120 presents simulation results for three device types A, B, and C to the user. When the user selects the individual model generation process for the device type C or the device model C with reference to the presented simulation result, the model processor 120 executes the selected individual model generation process for the device type C and acquires the individual type model for the device type C.

Fig. 15 is a flowchart illustrating the individual model generation process according to an embodiment of the present disclosure. The individual model generation process may be performed by the model generation apparatus 100, and more specifically, may be implemented by executing one or more programs or instructions stored in one or more memory devices 103 by one or more processors 104 of the model generation apparatus 100.

As illustrated in Fig. 15, in step S501, the model generation apparatus 100 acquires base model information. More specifically, the model information acquirer 110 acquires base model information indicating a base model commonly used for a specific task from the model DB 20.

In step S502, the model generation apparatus 100 presents simulation results for each of the device types. Specifically, the model processor 120 may present, to the user, a simulation result indicating the performance, such as prediction accuracy and calculation speed, of the individual type model for each device type as reference information when the user selects the individual model generation process or the device type.

In step S503, the model generation apparatus 100 receives the selected individual model generation process or and the selected device type. Specifically, the model processor 120 receives, from a user or the like, identification information (e.g., a process ID) for identifying one or more individual model generation processes or identification information (e.g., a device ID) for identifying a device type, and specifies an individual model generation process for a device type corresponding to the received identification information.

In step S504, the model generation apparatus 100 executes the selected individual model generation process or the individual model generation process corresponding to the selected device type. Specifically, the model processor 120 executes the individual model generation process for the device type corresponding to the received identification information based on the base model information, and acquires the corresponding individual type model. For example, upon receiving identifying information indicating the individual model generation process for device time C (e.g., process ID = C) or identifying information indicating the device type C (e.g., device ID = C) from the user, the model processor 120 executes the individual model generation process for device type C and generates an individual type model for device type C on the basis of the base model information.

According to the present embodiment, it is possible to efficiently acquire the corresponding individual type model by presenting the simulation result related to the individual type model of each device model to the user and executing the individual model generation process selected by the user or the individual model generation process corresponding to the selected device type from the base model which can be commonly used for the specific task.

### Variation 5

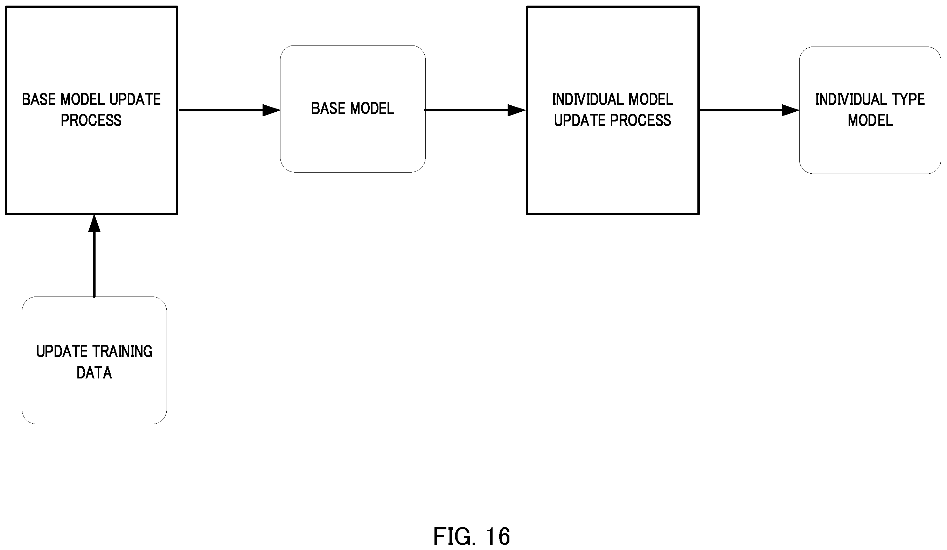

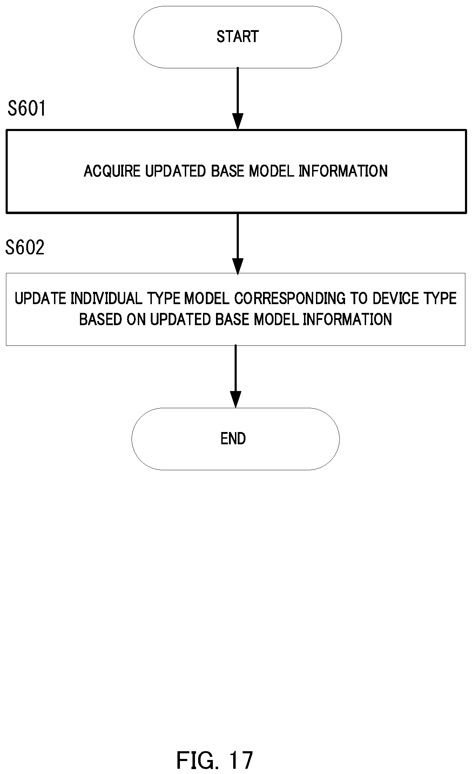

Next, with reference to Figs. 16 and 17, an individual type update process according to an embodiment of the present disclosure will be described. In this embodiment, when the base model is updated by the training data, the model processor 120 may update the individual type model based on the updated base model information. Note that the update of the base model according to the present embodiment may be executed by the model generation apparatus 100, or may be executed by a training apparatus (not illustrated) different from the model generation apparatus 100.

Fig. 16 is a schematic diagram illustrating the individual model update process according to an embodiment of the present disclosure. As illustrated in Fig. 16, when the base model update process is executed on the base model by the update training data and the base model information indicating the updated base model is acquired, the model processor 120 executes the individual model update process based on the updated base model information and updates the individual type model corresponding to the specific device type from the updated base model. In the illustrated example, the model processor 120 executes the individual model update process corresponding to any device type and generates an individual type model corresponding to the device type from the updated common base model.

Fig. 17 is a flowchart illustrating the individual model update process according to an embodiment of the present disclosure. The individual model update process may be performed by the model generation apparatus 100, and more specifically, may be implemented by one or more processors 104 of the model generation apparatus 100 executing one or more programs or instructions stored in one or more memory devices 103.

As illustrated in Fig. 17, in step S601, the model generation apparatus 100 acquires updated base model information. More specifically, the model information acquirer 110 acquires base model information (for example, architecture information, parameter information, and the like) indicating the updated base model from the model DB 20. Note that the model information acquirer 110 may acquire the updated base model itself instead of or in addition to the updated base model information.

In step S602, the model generation apparatus 100 updates the individual type model corresponding to the device type based on the updated base model information. Specifically, the model processor 120 may perform one or both of pruning and quantization on the updated base model based on the updated base model information, and may update the individual type model for the specific device type based on the updated base model.

According to this embodiment, in response to the update of the base model, the individual type model can also be updated.

### Variation 6

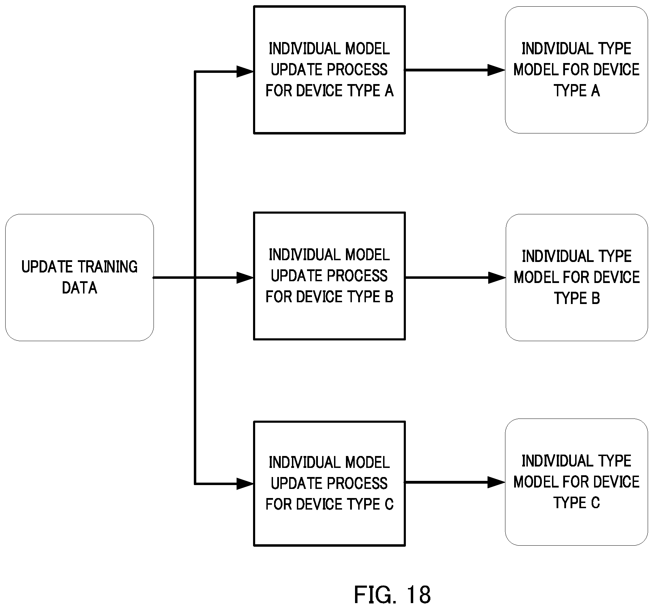

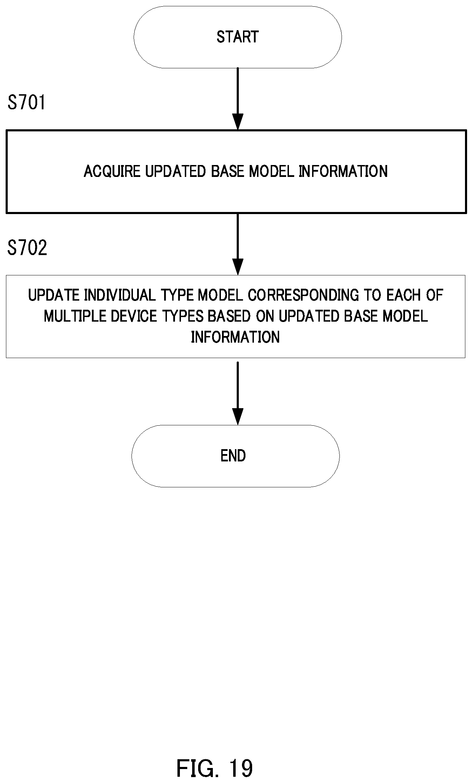

Next, an individual type update process according to another example of the present disclosure will be described with reference to Fig. 18 and Fig. 19. In the present embodiment, the model processor 120 may execute an individual model update process of updating the individual type model for each device type corresponding to each of the plurality of device types based on the updated base model information.

Fig. 18 is a schematic diagram illustrating the individual model update process according to an embodiment of the present disclosure. As illustrated in Fig. 18, when the base model update process is executed on the base model by the update training data and the base model information indicating the updated base model is acquired, the model processor 120 executes the individual model update process for each device type corresponding to each of the plurality of device types based on the updated base model information, and updates the individual type model corresponding to each device type from the updated base model. In the illustrated example, the model processor 120 executes three individual model update processes corresponding to the three device types A, B, and C, and updates three individual type models from the updated base model.

Fig. 19 is a flowchart illustrating the individual model update process according to an embodiment of the present disclosure. The individual model update process may be performed by the model generation apparatus 100, and more specifically, may be implemented by one or more processors 104 of the model generation apparatus 100 executing one or more programs or instructions stored in one or more memory devices 103.

As illustrated in Fig. 19, in step S701, the model generation apparatus 100 acquires the updated base model information. More specifically, the model information acquirer 110 acquires base model information indicating the updated base model from the model DB 20.

In step S702, the model generation apparatus 100 updates the individual type model corresponding to each of the plurality of apparatuses based on the updated base model information. For example, in a case of updating three individual type models corresponding to three device types A, B, and C, the model processor 120 may update the individual type models of the device types A, B, and C by performing one or both of pruning and quantization on the base model based on the updated base model information.

Note that the above-described individual model update process may be implemented by executing the above-described pruning and/or quantization on the updated base model. In addition, which individual model update process is executed among the plurality of individual model update processes may be determined based on identification information (for example, a process ID or the like) indicating the individual model update process or a device type (for example, a device type ID or the like). In addition, when the user selects the individual model update process or the device type, the simulation result of the individual type model to be updated may be presented.

According to this example, in response to an update of the base model, an individual type model for each of the plurality of device types can also be updated.

For the above description, the following supplementary notes are further disclosed.

### Supplementary Note 1

A model generation apparatus including: a model information acquirer that acquires base model information indicating a base model; and a model processor that generates an individual type model corresponding to each of a plurality of device types based on the base model information.

### Supplementary Note 2

The model generation apparatus according to Supplementary Note 1, in which the model processor performs one or both of pruning and quantization on the base model.

### Supplementary Note 3

The model generation apparatus according to Supplementary Note 1 or 2, in which the model processor executes a generation process of generating an individual type model corresponding to each of a plurality of device types based on the base model information.

### Supplementary Note 4

The model generation apparatus according to Supplementary Note 3, in which the model processor executes the generation process selected.

### Supplementary Note 5

The model generation apparatus according to Supplementary Note 3 or 4, in which the model processor executes the generation process corresponding to a selected device type.

### Supplementary Note 6

The model generation apparatus according to any one of Supplementary Notes 3 to 5, in which the model processor presents a simulation result related to the individual type model to a user.

### Supplementary Note 7

The model generation apparatus according to any one of Supplementary Notes 1 to 6, in which when the base model is updated by training data, the model processor updates the individual type model by the base model updated.

### Supplementary Note 8

The model generation apparatus according to Supplementary Note 7, in which the model processor executes an update process of updating the individual type model for each device type corresponding to each of the plurality of device types based on the base model information updated.

### Supplementary Note 9

A model generation method including: acquiring base model information indicating a base model; and generating an individual type model corresponding to each of a plurality of device types based on the base model information.

### Supplementary Note 10

A computer-readable storage medium storing a program for causing a computer to execute: acquiring base model information indicating a base model; and generating an individual type model corresponding to each of a plurality of device types based on the base model information.

Although the examples of the present disclosure have been described in detail above, the present disclosure is not limited to the above-described specific embodiments, and various modifications and changes can be made within the scope of the gist of the present disclosure described in the claims.

The disclosures of the specification, drawings and abstract contained in the Japanese Patent Application No. 2022-109751 Japanese application filed on Jul. 7, 2022 are incorporated herein by reference in their entirety.

### Reference symbols list

10 Model generation system
20 Model database (db)
30 Terminal
100 Model generation apparatus
110 Model information acquirer
120 Model processor

## Claims

1. A model generation apparatus comprising:
a model information acquirer that acquires base model information indicating a base model; and
a model processor that generates an individual type model corresponding to each of a plurality of device types based on the base model information.

2. The model generation apparatus according to claim 1, wherein the model processor performs one or both of pruning and quantization on the base model.

3. The model generation apparatus according to claim 1, wherein the model processor executes a generation process of generating an individual type model corresponding to each of a plurality of device types based on the base model information.

4. The model generation apparatus according to claim 3, wherein the model processor executes the generation process selected.

5. The model generation apparatus according to claim 3, wherein the model processor executes the generation process corresponding to a selected device type.

6. The model generation apparatus according to claim 3, wherein the model processor presents a simulation result related to the individual type model to a user.

7. The model generation apparatus according to claim 1, wherein when the base model is updated by training data, the model processor updates the individual type model by the base model updated.

8. The model generation apparatus according to claim 7, wherein the model processor executes an update process of updating the individual type model for each device type corresponding to each of the plurality of device types based on the base model information updated.

9. A model generation method comprising:
acquiring base model information indicating a base model; and
generating an individual type model corresponding to each of a plurality of device types based on the base model information.

10. A program for causing a computer to execute:
acquiring base model information indicating a base model; and
generating an individual type model corresponding to each of a plurality of device types based on the base model information.
